# NEUE EUROPÄISCHE PATENTSCHRIFT

(11) **EP 2 922 893 B2**
(45) Veröffentlichungstag und Bekanntmachung des Hinweises auf die Entscheidung über den Einspruch: **23.09.2026**
(45) Hinweis auf die Patenterteilung: 06.04.2016
(21) Anmeldenummer: 13770447.4
(22) Anmeldetag: 25.09.2013
(51) Int. Cl.: C08G 77/04, C08G 77/26, C08L 101/10, C09D 171/00, C09D 175/04, C09D 183/04, C09J 133/08, C09J 147/00, C09J 171/00, C09J 175/04, C09J 183/04, C09D 133/08, C09D 147/00

(54) **FEUCHTIGKEITSHÄRTENDE ZUSAMMENSETZUNGEN, VERFAHREN ZU DEREN HERSTELLUNG UND DEREN VERWENDUNG**
MOISTURE-CURING COMPOSITIONS, PROCESSES FOR PRODUCING SAME AND USE OF SAME
COMPOSITIONS DURCISSABLES À L'HUMIDITÉ, PROCÉDÉ POUR LA PRÉPARATION ET L'UTILISATION DESDITES COMPOSITIONS

(30) Priorität: 22.11.2012 DE 102012221375
(43) Veröffentlichungstag der Anmeldung: 30.09.2015
(73) Patentinhaber: Evonik Operations GmbH, 45128 Essen (DE)
(72) Erfinder: SCHLOSSER, Thomas, 79594 Inzlingen (DE); KIEFER, Ingo, 79650 Schopfheim (DE); FRITZ, Jürgen, 79639 Grenzach-Wyhlen (DE); KRAUSE, Regina, 79618 Rheinfelden (DE); SCHÜTT, Svenja, 79540 Lörrach (DE)
(74) Vertreter: f & e patent
(86) Internationale Anmeldenummer: PCT/EP2013/069969
(87) Internationale Veröffentlichungsnummer: WO 2014/079613

(56) Entgegenhaltungen:
- EP-A1- 1 967 550
- EP-A2- 0 997 469
- EP-A2- 1 304 345
- WO-A1-2012/065716
- WO-A2-03/000775
- CA-A1- 2 365 171
- DE-A1- 102004 008 668
- DE-A1- 102006 022 834
- US-A- 5 302 671
- US-A- 5 508 360
- US-A1- 2011 308 730
- "Choosing the Right Silane Adhesion Promoters for SMP Sealants", ASI ADHESIVES AND SEALANTS, 27 February 2002 (2002-02-27), pages 1 - 8, XP055338293
- DOW CORNING;, GPS SAFETY REPORT FÜR CAS 3069-29-2 = 3-(2-AMINOETHYLAMINO)PROPYLDIMETHOXYMETHYLSILANE, pages 1 - 4, XP055338306
- "Silicone Silane Coupling Agents", SHINETSU, December 2011 (2011-12-01), pages 1 - 24, XP055339866
- "Product Information Dynasylan® 1146", DYNASYLAN, December 2011 (2011-12-01), XP055339870, Retrieved from the Internet <URL:http://mychem.ir/upbads/tds/25048.pdf>
- ANONYMOUS: "Dynasylan Hydrosil 2627", 3 February 2014 (2014-02-03), XP055099950, Retrieved from the Internet <URL:http://www.dynasylan.com/lpa-productfinder/page/productsbytext/detail.html?pid=245&lang=en&ret=2f6c70612d70726f6475637466696e6465722f706167652f70726f64756374736279746578742f6c6973742e68746d6c3f6d3d30266c616e673d656e26706167653d3726713d> [retrieved on 20140203]
- ANONYMOUS: "Dynasylan Hydrosil 1151", 3 February 2014 (2014-02-03), XP055099956, Retrieved from the Internet <URL:http://www.dynasylan.com/lpa-productfinder/page/productsbytext/detail.html?pid=233&lang=en&ret=2f6c70612d70726f6475637466696e6465722f706167652f70726f64756374736279746578742f6c6973742e68746d6c3f6d3d30266c616e673d656e26706167653d3626713d> [retrieved on 20140203]

## Beschreibung

Die vorliegende Erfindung betrifft Kleb- und Dichtstoffe, welche ausgewählte Haftvermittler und ausgewählte vernetzbare Polymere enthalten, Verfahren zu deren Herstellung und deren Verwendung, insbesondere zum Kleben von schwierig miteinander zu verklebenden Substraten.

Organofunktionelle Silane werden seit vielen Jahren erfolgreich zur Formulierung von Kleb- und Dichtstoffen eingesetzt. Speziell in feuchtigkeitsvernetzenden, sogenannten reaktiven Kleb- und Dichtstoffen, wie z.B. in Silikonen oder in (alkoxysilan)-terminierten Polymeren, wie Polyurethanen oder Polyethern, haben sich aminofunktionelle Alkoxysilane als effiziente Haftvermittler bewährt.

Beispiele für unter Feuchtigkeitseinwirkung nachvernetzende Schmelzkleber oder Dichtstoffe, die über terminale Isocyanat- und/oder Alkoxysilangruppen aushärten und die mit Aminosilanen funktionalisierte Polymere enthalten, finden sich in DE 38 40 220 A1.

Beim Einsatz von aminofunktionellen Alkoxysilanen als Haftvermittler gelingt es, die Haftung zum zu klebenden/abzudichtenden Substrat zu verbessern. Gleichzeitig wird dabei auch die Kohäsion innerhalb des Kleb- und Dichtstoffs erhöht. Für die Abdichtung/Klebung von generell schwierig abzudichtenden oder von schwierig zu klebenden Substraten, wie z.B. Aluminium und Kunststoffen, beispielsweise Polymethylmethacrylat ("PMMA") und Polycarbonat ("PC"), liefern standardmässig eingesetzte, aminofunktionelle Alkoxysilane, wie z.B. Aminopropyltrimethoxysilan (Dynasylan^{®} AMMO), meist nur eine grundlegende Haftung. Deshalb muss in diversen Anwendungen mit sogenannten Primern (vor)gearbeitet werden.

Aufgabe der vorliegenden Erfindung ist die Bereitstellung von Zusammensetzungen, die insbesondere als Kleb- und Dichtstoffe eingesetzt werden können, die einfach anwendbar und dosierbar sind, und die Klebungen und Dichtungen mit einer deutlich verbesserten Haftung zu unterschiedlichsten Substraten, beispielsweise zu Metallen und Kunststoffen, ergeben. Beim Einsatz der erfindungsgemäßen Zusammensetzungen kann die Verwendung eines Primers entfallen.

Überraschenderweise wurde gefunden, dass der Einsatz von Aminopropyl-funktionellen Siloxan-Oligomeren in Kombination mit Silan-modifizierten Polymeren zur Haftungsverbesserung von Klebungen aus feuchtigkeitsvernetzenden Kleb- und Dichtstoffen, wie z.B. von Silikonen oder von silan-modifizierten Polyurethanen oder von silan-modifizierten Polyethern, an unterschiedlichsten Substraten, z.B. an Aluminium- oder Kunststoffoberflächen, führt.

Die vorliegende Erfindung betrifft Zusammensetzungen gemäß Anspruch 1.

Die als Komponente a) eingesetzten, mit Silangruppen modifizierten Polymere können beliebigen Gruppen angehören, solange diese mindestens eine, vorzugsweise mindestens zwei Silangruppen (R¹)ₐ(X)_{b}Si- pro Polymermolekül aufweisen. Die Silangruppen können an unterschiedlichen Stellen des Polymermoleküls angebracht sein. Vorzugsweise handelt es sich um Endgruppen (= terminale Gruppen) des Polymers und/oder um nicht-terminale Gruppen im Gerüst des Polymers.

Die Gruppen X verleihen dem modifizierten Polymer die Eigenschaft, bei Feuchtigkeit zu vernetzen. Vorzugsweise handelt es sich bei den Gruppen X um Reste R²O-.

Bei den in den Silangruppen der Polymeren der Komponente a) auftretenden Alkoxy-Amino-, Hydrocarbylcarboxy, z.B. Acetoxy, oder Oximresten kann es sich prinzipiell um beliebige derartige Reste mit geradkettigen oder verzweigten Alkylteilen oder mit anderen Kohlenwasserstoffresten handeln. Typischerweise werden Reste mit kurzkettigen Alkylresten mit bis zu sechs Kohlenstoffatomen, insbesondere mit ein bis drei Kohlenstoffatomen eingesetzt. Besonders bevorzugte Beispiele dafür sind N-Methylamino, N-Ethylamino, Acetoxy, N, N-Dimethyloxim, N, N-Diethyloxim und ganz besonders bevorzugt Methoxy, Ethoxy oder Propoxy.

Bei den in den Silangruppen der Polymeren der Komponente a) auftretenden Alkylresten kann es sich prinzipiell um beliebige geradkettige oder verzweigte Alkylreste handeln. Typischerweise werden kurzkettige Alkylreste mit ein bis zu sechs Kohlenstoffatomen, insbesondere mit ein bis drei Kohlenstoffatomen eingesetzt. Besonders bevorzugte Beispiele dafür sind Methyl, Ethyl, Propyl, Butyl, Pentyl und Hexyl, besonders bevorzugt Methyl oder Ethyl.

Bei den in den Silangruppen der Polymeren der Komponente a) auftretenden Cycloalkylresten kann es sich prinzipiell um beliebige Cycloalkylreste handeln. Typischerweise werden Cycloalkylreste mit fünf bis acht Ringkohlenstoffatomen, insbesondere mit fünf bis sechs Ringkohlenstoffatomen eingesetzt. Besonders bevorzugte Beispiele dafür sind Cyclopentyl oder insbesondere Cyclohexyl. Entsprechendes gilt für die in den Silangruppen der Polymeren der Komponente a) auftretenden Cycloalkylamino-, Cycloalkyloxycarbonyl-, Cycloalkyloxim- und Cycloalkyloxyreste. Diese Reste können gegebenenfalls auch substituiert sein, beispielsweise mit Halogenatomen, Alkylgruppen, Hydroxy- oder Aminogruppen.

Bei den in den Silangruppen der Polymeren der Komponente a) auftretenden Arylresten kann es sich prinzipiell um beliebige carbocycische oder heterocyclische aromatische Reste handeln. Typischerweise werden carbocyclische Arylreste mit sechs bis zehn Ringkohlenstoffatomen eingesetzt; oder es werden heterocyclische Arylreste mit drei bis acht Ringkohlenstoffatomen und mit ein bis drei Ringheteroatomen, beispielsweise Stickstoff, Sauerstoff oder Schwefel, eingesetzt. Besonders bevorzugte Beispiele für carbocyclische Arylreste sind Phenyl oder Naphthyl. Entsprechendes gilt für die in den Silangruppen der Polymeren der Komponente a) auftretenden Arylamino-, Aryloxycarbonyl-, Aryloxim- und Aryloxyreste. Diese Reste können gegebenenfalls auch substituiert sein, beispielsweise mit Halogenatomen, Alkylgruppen, Hydroxy- oder Aminogruppen.

Die Indizes a und b können bei unterschiedlichen Silangruppen innerhalb eines Polymermoleküls im Rahmen der oben gegebenen Definitionen unterschiedliche Bedeutungen annehmen. Die Summe von a und b muss jedoch stets 3 betragen. Vorzugsweise bedeutet a 0 oder 1 und b bedeutet 2 oder 3.

In besonders bevorzugten Zusammensetzung werden Komponenten a) eingesetzt, deren Silangruppen ausgewählt werden aus der Gruppe der Alkyldialkoxysilangruppen und/oder der Trialkoxysilangruppen, insbesondere aus der Gruppe Methyldimethoxysilangruppen und/oder Trimethoxysilangruppen und/oder Methyldiethoxysilangruppen und/oder Triethoxysilangruppen.

Ganz besonders bevorzugt werden Zusammensetzungen deren modifizierte Polymere a) terminale oder nicht-terminale Alkyldialkoxysilangruppen und/oder Trialkoxysilangruppen aufweisen.

Die Silangruppe (R¹)ₐ(X)_{b}Si- in den modifizierten Polymeren der Komponente a) verleiht dieser Komponente die Eigenschaft, unter Zutritt von Feuchtigkeit Vernetzungsreaktionen einzugehen. In der Regel bilden sich bei Zutritt von Feuchtigkeit, beispielsweise von Luftfeuchtigkeit, in Abhängigkeit der Natur der Gruppe X unter Abspaltung von Alkohol R²OH, Carbonsäure R²COOH, Oxim (R²)₂C=NOH oder Amin R²NH₂ Silizium-Sauerstoffbrücken Si-O-Si aus. Dieses erfolgt in der Regel mit Silangruppen unterschiedlicher Polymerer, so dass ein dreidimensionales Netzwerk entsteht. Diese Reaktionen sind dem Fachmann bekannt.

Bei den Polymeren der Komponente a) handelt es sich vorzugsweise um mit mindestens einer, vorzugsweise mit mindestens zwei Silangruppen (R¹)ₐ(X)_{b}Si- modifizierte Polymere, ausgewählt aus der Gruppe der Polyurethane, Polysiloxane (entsprechend Silikone), Polyether, Polyacrylate oder Polybutadiene, insbesondere um solche, die mit mindestens einer Silangruppe (R¹)ₐ(R²O)_{b}Si modifiziert sind.

Die Anbindung der Silangruppe(n) an das Polymergerüst kann auf unterschiedlichste Art und Weise erfolgen. Das Siliziumatom der Silangruppe kann direkt an das Polymergerüst gekoppelt werden oder über eine Spacergruppe, wie eine Alkylengruppe. Das Ankoppeln der Silangruppe kann über reaktive Endgruppen erfolgen, beispielsweise über Vinyl, Hydroxy-, Amino- oder Isocyanatgruppen der Polymere, welche mit entsprechenden reaktiven Gruppen an der Silangruppe umgesetzt werden können.

So lassen sich beispielsweise mit Isocyanatgruppen terminierte Polyurethane mit Aminoalkyl-trialkoxysilanen zu einem Trialkoxysilan-terminierten Polyurethan umsetzen. Diese Umsetzungen sind dem Fachmann bekannt und entsprechende Polymere sind kommerziell erhältlich, beispielsweise von Bayer MaterialScience AG, Momentive Specialty Chemicals Inc. und Evonik Hansechemie GmbH.

Ein Beispiel für mit Silangruppen terminierte Polyether sind die MS Polymeren der Fa. Kaneka Corporation.

Ein Beispiel für mit Silangruppen terminierte Polyacrylate sind die XMAP Polymeren der Fa. Kaneka Corporation.

Ein Beispiel für mit Silangruppen terminierte Polybutadiene sind die EPION Polymeren der Fa. Kaneka Corporation.

Beispiele für mit Silangruppen terminierte Polysiloxane sind kommerziell erhältliche feuchtigkeitsvernetzende Polysiloxane verschiedenster Hersteller (RTV 1-Typen).

Die als Komponente a) eingesetzten funktionalisierten Polymere sind bei 25 °C in der Regel flüssig und weisen typischerweise Viskositäten bei 25 °C im Bereich von 5.000 bis 1.000.000 mPas, vorzugsweise von 10.000 bis 50.000 mPas auf (ermittelt nach DIN 53019).

Besonders bevorzugte Komponenten a) sind mit Silangruppen (R¹)ₐ(X)_{b}Si- modifizierte Polyurethane, welche bei 25 °C eine Viskosität 10.000 bis 1.000.000 mPas, vorzugsweise von 30.000 bis 50.000 mPas aufweisen (ermittelt nach DIN 53019).

Der Gehalt an Silangruppen (R¹)ₐ(X)_{b}Si- im erfindungsgemäß eingesetzten Polymer der Komponente a) beträgt üblicherweise von 2 bis 20, vorzugsweise von 4 bis 10. Pro Polymermolekül sind im Mittel zwei bis zehn, vorzugsweise zwei bis vier Silangruppen (R¹)ₐ(X)_{b}Si- enthalten.

Der Flammpunkt dieser Polymere sollte möglichst > 100 °C und der Stockpunkt < 20 °C liegen. Abhängig von der Anwendung sind teilweise transparente, helle, unverfärbte Produkte gefordert.

Der Anteil der Komponente a), bezogen auf die Gesamtmenge der erfindungsgemäßen Zusammensetzung, beträgt üblicherweise 10 bis 99 Gew.-%, vorzugsweise 20 bis 50 Gew.-%.

Bei den erfindungsgemäß als Komponente b) eingesetzten Aminoalkyl-funktionellen Siloxan-Oligomeren handelt es sich an sich um Verbindungen, wie sie allgemein auch als homo- sowie cokondensierte Aminopropyl-funktionelle Derivate dieser Oligomeren bezeichnet werden, nach folgend auch kurz als Gemische bezeichnet.

Die erfindungsgemäß als Komponente b) eingesetzten Aminoalkyl-funktionellen Siloxan-Oligomere stellen somit vorteilhaft Gemische kettenförmiger und/oder cyclischer Siloxane mindestens der allgemeinen Formeln I und/oder II dar 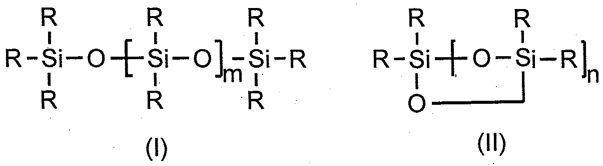 in denen die Gruppen R unabhängig voneinander aus
(i) Aminopropyl-funktionellen Gruppen der Formeln -(CH₂)₃-NH₂, -(CH₂)₃-NH(CH₂)₂-NH₂ oder -(CH₂)₃-NH(CH₂)₂-NH(CH₂)₂-NH₂, und
(ii) Methoxy- oder Ethoxy-Gruppen bestehen,
m eine ganze Zahl von 2 bis 30 und n eine ganze Zahl von 3 bis 30 sind, wobei an ein Siliciumatom einer Verbindung der Formel I sowie II höchstens eine Aminopropyl-funktionelle Gruppe gebunden ist und
wobei der Quotient aus dem molaren Verhältnis von Si zu Alkoxy-Gruppen mindestens 0,3, insbesondere mindestens 0,5 beträgt ist und dass die einzelnen Gruppen R in den Verbindungen der Formeln I sowie II eines Gemischs der Aminopropyl-funktionellen Alkoxysiloxan-Oligomere die Reste
- 3-Aminopropyl und Methoxy,
- 3-Aminopropyl und Ethoxy,
- N-(2-Aminoethyl)-3-aminopropyl und Methoxy,
- N-(2-Aminoethyl)-3-aminopropyl und Ethoxy,

- N-[N'-(2-Aminoethyl)-2-aminoethyl]-3-aminopropyl und Methoxy, oder
- N-[N'-(2-Aminoethyl)-2-aminoethyl]-3-aminopropyl und Ethoxy, darstellen.

Bei den in den Verbindungen der Formeln I und/oder II auftretenden Alkoxyresten handelt es sich um Methoxy- oder Ethoxy Gruppen.

Der Anteil der Komponente b), bezogen auf die Gesamtmenge der erfindungsgemäßen Zusammensetzung, beträgt üblicherweise 0,1 bis 10 Gew.-%, vorzugsweise 0,5 bis 3 Gew.-%.

Bevorzugt erfindungsgemäß eingesetzte Aminoalkyl-funktionelle Siloxan-Oligomere stellen ein Gemisch kettenförmiger und/oder cyclischer Siloxane der allgemeinen Formeln I und/oder II dar, wobei der Gehalt an Alkoxygruppen zwischen 0,1 und 70 Gew.-%, besonders bevorzugt zwischen 0,1 und 60 Gew.-% und ganz besonders bevorzugt zwischen 5 und 50 Gew.-%, bezogen auf das Gewicht des Siloxan-Oligomerengemisches, beträgt.

Zu den ganz besonders bevorzugt erfindungsgemäß eingesetzten Aminoalkyl-funktionellen Siloxan-Oligomeren zählen die folgenden kettenförmigen und cyclischen Siloxan-Oligomeren:
3-Aminopropyl-/Alkoxy-Siloxane; N-Aminoethyl-3-aminopropyl-/Alkoxy-Siloxane, wobei die Alkoxygruppen Methoxy oder Ethoxy-Gruppen sind, aber auch Ethoxy und Methoxy-Gruppen nebeneinander vorliegen können.

Besonders bevorzugt wird als Komponente b) ein Gemisch kettenförmiger und/oder cylischer Siloxan-Oligomerer der Formeln I und/oder II eingesetzt, das einen Siedepunkt bei 1 atm Druck von größer als 200 °C aufweist.

Besonders bevorzugt wird als Komponente b) ein Gemisch kettenförmiger und/oder cyclischer Siloxan-Oligomerer der Formeln I und/oder II eingesetzt, das einen Flammpunkt von größer als 100 °C aufweist.

Die Herstellung dieser Aminoalkylfunktionellen Siloxan-Oligomeren kann im Allgemeinen, wie in der EP 0 997 469 A2 beschrieben, erfolgen oder nach Routineverfahren der organischen Chemie. Ein Teil dieser Verbindungen ist kommerziell erhältlich.

Solche Gemische sind dadurch gekennzeichnet, dass die einzelnen Gruppen R in den Verbindungen der Formeln I sowie II eines Gemischs der Aminopropyl-funktionellen Alkoxysiloxan-Oligomere die Reste
- 3-Aminopropyl und Methoxy,
- 3-Aminopropyl und Ethoxy,
- N-(2-Aminoethyl)-3-aminopropyl und Methoxy,
- N-(2-Aminoethyl)-3-aminopropyl und Ethoxy,
- N-[N'-(2-Aminoethyl)-2-aminoethyl]-3-aminopropyl und Methoxy, oder
- N-[N'-(2-Aminoethyl)-2-aminoethyl]-3-aminopropyl und Ethoxy,
darstellen.

Ferner weisen solche Gemische enthaltend kettenförmige Aminopropyl-funktionelle Alkoxysiloxane der allgemeinen Formel I und/oder cyclische Aminopropyl-funktionelle Alkoxysiloxane der allgemeinen Formel II vorteilhaft einen Siedepunkt bei 1 atm Druck von größer als 200 °C auf.

Darüber hinaus weisen solche Gemische enthaltend kettenförmige Aminopropyl-funktionelle Alkoxysiloxane der allgemeinen Formel I und/oder cyclische Aminopropyl-funktionelle Alkoxysiloxane der allgemeinen Formel II einen Flammpunkt von größer als 100 °C auf.

So bevorzugte Gemische basieren in der Regel im Wesentlichen auf kettenförmigen Aminopropyl-funktionellen Alkoxysiloxanen der Formel I und/oder cyclischen Aminopropyl-funktionellen Alkoxysiloxanen der allgemeinen Formel II, wobei der Gehalt an Alkoxygruppen bevorzugt zwischen 0,1 und 70 Gew.-%, besonders bevorzugt 0,5 bis 60 Gew.-% und ganz besonders bevorzugt 5 bis 50 Gew.-%, und der Gehalt an freiem Alkohol im Gemisch, insbesondere Methanol und/oder Ethanol, < 5 Gew.-%, vorzugsweise 0,001 bis 3 Gew.-%, besonders vorzugsweise 0,01 bis 1 Gew.-%, bezogen auf das Gewicht des Aminopropyl-funktionelle Alkoxysiloxan-Oligomerengemisches, beträgt.

Zur besonders schonenden Herstellung solcher bevorzugter Gemische mindestens enthaltend kettenförmige Aminopropyl-funktionelle Alkoxysiloxane der allgemeinen Formel I und/oder cyclische Aminopropyl-funktionelle Alkoxysiloxane der allgemeinen Formel II setzt man
- als Komponente A mindestens ein 3-Aminopropyl-funktionelles Trialkoxysilan, mindestens ein N-(2-Aminoethyl)-3-aminopropyl-funktionelles Trialkoxysilan und/oder mindestens ein N-[N'-(2-Aminoethyl)-2-aminoethyl]-3-aminopropyltrialkoxysilan ein, wobei Alkoxy jeweils Methoxy oder Ethoxy bedeutet,
- die Komponente A unter Einsatz von 0,7 bis 1,2 mol Wasser pro 1 mol Si und der 0,1- bis 0,5fachen Gewichtsmenge an Methanol oder Ethanol, bezogen auf die eingesetzten Alkoxysilane, bei einer Temperatur von 60 bis 80 °C gezielt hydrolysieren sowie kondensieren bzw. cokondensieren und
- nachfolgend den eingesetzten sowie bei der Umsetzung freigewordenen Alkohol bei Normaldruck oder unter vermindertem Druck und einer Sumpftemperatur bis 90 °C destillativ aus dem Produktgemisch entfernen. Man setzt dabei als Komponenten A
   - 3-Aminopropyltrimethoxysilan (AMMO),
   - 3-Aminopropyltriethoxysilan (AMEO),
   - N-(2-Aminoethyl)-3-aminopropyltrimethoxysilan (DAMO),
   - N-(2-Aminoethyl)-3-aminopropyltriethoxysilan (DAEO),
   - N-[N'-(2-Aminoethyl)-2-aminoethyl]-3-aminopropyltrimethoxysilan (TRIAMO), oder
   - N-[N'-(2-Aminoethyl)-2-aminoethyl]-3-aminopropyltriethoxysilan,
   ein.

Zur Durchführung des besagten besonders produktschonenden Verfahrens zur Herstellung einer besonders bevorzugten Komponente b) kann man vorteilhaft wie folgt vorgehen:
In der Regel legt man zunächst die Komponente(n) A vor. Man kann auch ein Gemisch der betreffenden Komponenten vorlegen. Ferner kann man aber auch eine oder beide (Alkoxysilan-)Komponenten zumindest anteilig vorlegen und hydrolysieren, vorzugsweise partiell hydrolysieren, und anschließend die verbleibende Mengen der anderen (Alkoxysilan-)Komponente(n) zusetzen und mit der Hydrolyse fortfahren. Die vorliegende Alkoxysilanmischung wird so vorteilhaft unter Zugabe der 0,1- bis 0,5fachen Gewichtsmenge, vorzugsweise der 0,11- bis 0,3fachen Gewichtsmenge an Methanol und/oder Ethanol, bezogen auf die eingesetzten Alkoxysilane, über eine Zeitspanne bis zu etwa 30 Minuten verdünnt. Dabei kann die dosierte Menge Alkohol wässrig sein und das Reaktionsgemisch wird vorteilhaft durchmischt. Ferner dosiert man die für die Umsetzung in Summe berechnete, ggf. noch fehlende Menge an Wasser, geeigneterweise unter guter Durchmischung, beispielsweise unter Rühren, und ebenfalls über eine Zeitspanne bis zu etwa 30 Minuten. So setzt man in Summe vorteilhaft 0,7 bis 1,2 mol, bevorzugt 0,75, 0,8, 0,85, 0,9, 0,95, 1,0, 1,05, 1,1, 1,15 mol - um nur einige der Zwischenwerte zu nennen- Wasser pro 1 mol Si der eingesetzten Alkoxysilane ein. Vorteilhaft kann man vor und/oder nach der Alkohol-, Alkohol/Wasser- und/oder Wasserdosierung das Reaktionsgemisch erwärmen, vorzugsweise auf 60 bis 80 °C, bevorzugt 60, 62, 64, 66, 68, 70, 72, 74, 76, 78 °C - um nur einige der Zwischenwerte zu nennen; die Erwärmung kann auch stufenweise oder kontinuierlich erfolgen. Anschließend lässt man geeigneterweise noch über eine Zeitspanne von 15 Minuten bis 5 Stunden, vorzugsweise über 2 bis 4 Stunden, unter Durchmischung nachreagieren. Die Umsetzung kann aber auch in Gegenwart eines Hydrolyse- und Kondensationskatalysators, wie z.B. ein Zusatz von HCl konz. oder wässriger Salzsäure oder Schwefelsäure, um nur eine geeignete Katalysatoren zu nennen, bevorzugt in einer Menge von 0 bis 0,5, vorzugsweise 0,01 bis 0,3, besonders vorzugsweise 0,05 bis 0,2, insbesondere 0,1 Gew.-% HCl, bezogen auf eingesetzte Menge an Komponente(n) A durchgeführt werden. Der Katalysator kann beispielsweise gemeinsam mit dem Verdünnungsmittel, dem Verdünnungsmittel/Wasser-Gemisch und/oder dem Wasser zugesetzt werden. Nach der Umsetzung wird das so erhaltene Produktgemisch destillativ in einer besonders schonenden Weise aufarbeitet. Dabei wird der vorliegende Anteil an Methanol und/oder Ethanol in der Regel praktisch vollständig abgetrennt. Bevorzugt führt man die destillative Aufarbeitung der Produktmischung bei einer Sumpftemperatur bis 90 °C, vorzugsweise bei 50 bis 85 °C, besonders vorzugsweise bei 60 bis 80 °C, bei Normaldruck, d. h. Atmosphärendruck, oder unter vermindertem Druck, vorzugsweise bei einem Druck von 400 mbar bis auf 10 mbar fallend, durch. Durch die vorliegende Herstellweise kann man in vorteilhafter Weise Aminopropyl-funktionelle Alkoxysiloxan-Oligomerengemische [Komponente b)] erzeugen, welche im Falle von Cokondensaten beispielsweise eine statistische Verteilung oder Blockverteilung verschiedenfunktioneller [(R)₂Si(O-)_{2/2}]-Einheiten sowie endständige Einheiten [-O_{1/2}Si(R)₃] besitzen. Darüber hinaus kann ein erfindungsgemäßes Gemisch aber auch verzweigte Siloxanoligomere mit Einheiten [(R)Si(O-)_{3/2}] enthalten, d. h. Siloxanoligomere, die neben s. g. M- und D-Strukturen auch T-Strukturen enthalten.

Die Definition für M-, D-, T- und Q-Strukturen bezieht sich in der Regel auf die Anzahl gebundener Sauerstoffe, wie nachfolgend anhand von Silyleinheiten beispielhaft dargestellt:

| | |
|---|---|
| M = monofunktionelle Einheiten | [-O_{1/2}Si(R)₃] |
| D = difunktionelle Einheiten | [(R)₂Si(O-)_{2/2]} |
| T = trifunktionelle Einheiten | [(R)Si(O-)_{3/2}] |
| Q = tetrafunktionelle Einheiten | [Si(O-)_{4/2}] |

So kann man, um Silicone und Siloxane bzw. Silanoligomere anschaulicher beschreiben zu können, anstelle einer idealisierten formelmäßigen Beschreibung auch auf die M-, D-, T- und Q-Strukturen zurückgegriffen. Zur genaueren Nomenklatur der Benennung solcher Siloxanstrukturen sei auf das "Römpp Chemielexikon" - Stichwort: Silicone - hingewiesen. Beispielsweise können aus Baueinheiten M lediglich Dimere mit M₂ gebildet werden. Zum Aufbau von Ketten werden Zusammensetzungen von Baueinheiten D und M benötigt, sodass Trimere (M₂D), Tetramere (M₂D₂) und so fort bis zu linearen Oligomeren mit M₂Dₙ aufgebaut werden können. Zur Ausbildung von cyclischen Oligomeren werden Baueinheiten D benötigt. Auf diese Weise können beispielsweise Ringe mit D₃, D₄, D₅ oder höher aufgebaut werden. Verzweigte bzw. vernetzte Strukturelemente, zu denen auch Spiroverbindungen zu rechnen sind, werden erhalten, wenn Baueinheiten T und /oder Q zusammen vorliegen. Denkbare vernetzte Strukturen können als Tₙ (n ≥ 4); DₙTₘ (m < n); DₙTₘ (n >> m); D₃T₂; M₄Q; D₄Q und so weiter vorliegen, um nur einige denkbare Möglichkeiten zu nennen. Baueinheiten M werden auch als Stopper oder Regler bezeichnet, während D-Einheiten als Ketten- oder Ringbildner und die T- und gegebenenfalls auch die Q-Einheiten als Netzwerkbildner bezeichnet werden. So kann der Einsatz von Tetraalkoxysilanen aufgrund der vier hydrolysierbaren Gruppen und Zutritt von Wasser bzw. Feuchtigkeit Baueinheiten Q und somit die Ausbildung eines Netzwerks (raumvernetzt) bewirken. Demgegenüber können vollständig hydrolysierte Trialkoxysilane Verzweigungen, d.h. T-Einheiten [-Si(-O-)_{3/2}], in einem Strukturelement bedingen, beispielsweise MD₃TM₂ für ein Oligomer mit einem Oligomerisierungsgrad von n=7, wobei in diesen Strukturdarstellungen die jeweiligen Funktionalitäten an den freien Valenzen der Silyloxyeinheiten zu definieren sind.

Weitere Details zum Nomenklaturverständnis von M-, D-, T- und Q-Strukturen sowie diesbezüglicher Untersuchungsmethoden sind u. a.:
- "Strukturuntersuchungen von oligomeren und polymeren Siloxanen durch hochauflösende 29Si-Kernresonanz", H.-G. Horn, H. Ch. Marsmann, Die Markromolekulare Chemie 162 (1972), 255-267;
- "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300;
- "Chapter 8 - NMR spectroscopy of organosilicon compounds", Elizabeth A. Williams, The Chemistry of Organic Silicon Compounds, 1989 John Wiley & Sons Ltd, 511-533.

Der Gehalt an M-, D-, T- oder Q-Strukturen wird in der Regel nach einer dem Fachmann an sich bekannten Methode ermittelt, bevorzugt mittelt ²⁹Si-NMR.

Neben den Komponenten a) und b) kann die erfindungsgemäße Zusammensetzung noch weitere Hilfs- oder Zusatzstoffe enthalten, wie sie üblicherweise in Kleb- und Dichtmassen zum Einsatz kommen.

Beispiele dafür sind Füllstoffe, Pigmente oder Farbstoffe, Weichmacher, Rheologiehilfsmittel, Trocknungsmittel, Lösemittel, Reaktivverdünner, Klebeharze, Katalysatoren für die Vernetzungsreaktion der Polymeren der Komponente a), UV-Stabilisatoren, Hydrolysestabilisatoren, Antioxidantien, Flammschutzmittel, weitere Haftvermittler, weitere Zusätze, die der Zusammensetzung eine bestimmte Eigenschaft verleihen, wie Leitfähigkeitszusätze oder Benetzungshilfsmittel, oder Mischungen von zwei oder mehreren dieser Zusätze.

Der Anteil der Hilfs- und Zusatzstoffe, bezogen auf die Gesamtmenge der erfindungsgemäßen Zusammensetzung, beträgt üblicherweise 1 bis 90 Gew.-%, vorzugsweise 40 bis 80 Gew.-%.

Bevorzugte Weichmacher sind Alkylphthalate, wie Dibutylphthalat, Dioctylphthalat, Benzylbutylphthalat, Dibenzylphthalat, Düsononylphtalat, Düsodecylphthalat sowie Diundecylphthalat. Geeignet sind jedoch auch die bekannten Weichmacher aus der Gruppe der organischen Phosphate, Adipate, und Sebazate oder auch Benzylbenzoat, flüssige Polybutene, Dibenzoate oder Di- oder Oligopropylenglycole, Alkylsulfonsäureester des Phenols oder Kresols, Dibenzyltoluol oder Di-phenylether. Die Auswahlkriterien für die bevorzugt verwendete Weichmacher richten sich zum einen nach der Polymerzusammensetzung sowie zum anderen nach Viskosität, sowie den gewünschten rheologischen Eigenschaften der Zusammensetzung.

Zusätzlich können Thixotropiermittel, wie z.B. pyrogene und gefällte Kieselsäuren, Bentone, Harnstoffderivate, Polyamidwachse, fibrillierte oder Pulp-Kurzfasern sowie Farbpasten bzw. Pigmente in den Zusammensetzungen enthalten sein.

Außerdem kann die erfindungsgemäße Zusammensetzung mindestens einen weiteren, von den Verbindungen der Formeln I und II sich unterscheidenden Haftvermittler aufweisen. Vorzugsweise werden Haftvermittler auf der Basis organöfunktioneller Silane eingesetzt, beispielsweise Aminoalkylalkoxysilane, 3-Glycidyloxipropyl-trialkoxysilan, 3-Mercaptopropyl-trialkoxysilan, 3-Methacryloxypropyltrialkoxysilan, 3-Aminopropyl-trialkoxysilan, N-Aminoethyl-3-aminopropyl-methyldialkoxysilan, Phenylaminopropyl-trialkoxysilan, Aminoalkyl-trialkoxydisilan, iso-Butylmethoxysilan oder Vinyltrialkoxysilan. Dabei sind die Alkoxygruppen in der Regel C1- bis C4-Alkyoxygruppen. Weiterhin eignen sich als Haftvermittler beispielsweise Kohlenwasserstoffharze, Phenolharze, Terpen-Phenolharze, Resorcinharze oder deren Derivate, modifizierte oder unmodifizierte Harzsäuren bzw. deren Ester (wie Abietinsäurederivate), Polyamine, Polyamin-amide, Anhydride oder Anhydrid-enthaltende Copolymere.

Als Füllstoffe kann eine Vielzahl von Materialien in Frage kommen. Beispielsweise können Kreiden, natürliche gemahlene oder gefällte Calciumcarbonate, Calcium-Magnesium-Carbonate, Silicate vom Typ des Aluminium-Magnesium-Calcium-Silicates, z.B. Wollastonit, oder Schwerspat sowie Ruß eingesetzt werden. Es können aber auch Schichtsilikate eingesetzt werden, beispielsweise blättchenförmige Füllstoffe, wie z.B. Vermiculit, Glimmer oder Talk.

Als Pigmente und Farbstoffe können anorganische oder organische gefärbte Verbindungen eingesetzt werden. Beispiele für Pigmente sind Titandioxid oder Ruß.

Häufig werden Mischungen von Füllstoffen eingesetzt. Beispielsweise können natürliche, gemahlene Kreiden in oberflächenbeschichteter Form oder auch unbeschichtete Kreiden sowie gefällte, oberflächenbeschichtete Kreiden eingesetzt werden.

Zusätzlich zu den Polymeren der Komponente a) können die erfindungsgemäßen Zusammensetzungen Klebeharze, sogenannte "Tackifier-Harze", enthalten, die sich in der Regel in natürliche und synthetische Harze unterteilen lassen. Hierzu zählen beispielsweise die Alkydharze, Epoxydharze, Melaminharze, Phenolharze, Urethanharze, Kohlenwasserstoffharze, sowie natürliche Harze, wie Colophonium, Holzterpentinöl und Tallöl. Zu den synthetischen Harzen zählen Kohlenwasserstoffharze, Ketonharze, Cumaronindenharze, Isocyanatharze und Terpen-Phenolharze.

Weiterhin können die erfindungsgemäßen Zusammensetzungen Lösemittel enthalten. Als Lösemittel geeignet sind beispielsweise flüssige Kohlenwasserstoffe.

Außerdem können die erfindungsgemäßen Klebstoffe Entschäumer enthalten. Dazu zählen beispielsweise Entschäumer auf Fettalkoholbasis oder auf Silikonbasis.

Darüber hinaus können die erfindungsgemäßen Zusammensetzungen UV-Stabilisatoren und Antioxidantien enthalten. Beispiele dafür sind Phenole, insbesondere sterisch gehinderte Phenole, polyfunktionelle Phenole, schwefel- oder phosphorhaltige Phenole, Amine, insbesondere HALS-Typen. Als Stabilisatoren geeignet sind beispielsweise Hydrochinon, Hydrochinonmethylether, 2,3-(Di-tert.-butyl)hydrochinon, 1,3,5-Trimethyl-2,3,6-tris(3,5-di-tert.-butyl-4-hyydroxybenzyl)-benzol, Pentaerythrittetrakis-3-(3,5-di-tert.-butyl-4-hydroxyphenol)propionat, n-Octadecyl-3,5-di-tert.-butyl-4-hydroxyphenyl)propionat, 4,4-Methylenbis(2,6-di-tert.-butyl-phenol), 4,4-Thiobis(6-tert.-butyl-o-cresol), 2,6-Di-tert.-butylphenol, 6-(4-Hydroxyphenoxy)-2,4-bis(n-octylthio)-1,3,5-triazin, Di-n-octacecyl-3,5-di-tert.butyl-4-hydroxybenzylphosphonat, 2-(n-Octylthio)ethyl-3,5-di-tert.butyl-4-hydroxybenzoat, Sorbithexa[3-(3,5-di-tert.-butyl-4-hydroxyphenyl)propionat], p-Hydroxydiphenylamin, N-N'-Diphenylendiamin oder Phenothiazin.

Als UV-Stabilisatoren eignen sich beispielsweise Benzophenone, Benzotriazole, Oxalanilide, Phenyltriazine, HALS-Stabilisatoren, wie Tetramethylpiperidin-Derivate oder anorganische Verbindungen, wie Titandioxid, Eisenoxidpigmente oder Zinkoxid.

Als Trocknungsmittel eignen sich beispielsweise Alkoxysilane, wie Vinyltrimethoxysilan.

Die erfindungsgemäße Zusammensetzung kann auch Katalysatoren für die Vernetzungsreaktion der Polymeren der Komponente a) enthalten. Dem Fachmann sind solche Katalysatoren bekannt. Beispiele dafür sind Zinn-haltige Katalysatoren, beispielsweise Dialkylzinncarboxylate, wie Dibutylzinndilaurat oder Dibutylzinndistearat. Andere Beispiele sind Amine (z.B. DABCO), sowie Titan- oder Zirkoniumhaltige Verbindungen (z.B. Titanate oder Zirkonate).

Die erfindungsgemäßen Kleb- und Dichtstoffe können als Ein- oder Mehrkomponentenzusammensetzungen formuliert werden. Vorzugsweise werden Einkomponentenformulierungen oder Zweikomponentenformulierungen mit Komponenten A und B hergestellt. Im Falle von Zweikomponentenformulierungen enthält Komponente A vorzugsweise das Polymer a) und den Haftvermittler b) und Komponente B enthält vorzugsweise das zur Reaktion benötigte Wasser, beispielsweise in Form einer wässrigen Paste. Die Formulierungen werden nach der Herstellung in luftdichte Behälter abgefüllt, beispielsweise in Kartuschen oder in Kunststoffbeutel und in diesen Behältern teilweise mit Schutzgas (z.B. Stickstoff) überlagert.

Die Herstellung der erfindungsgemäßen Zusammensetzungen erfolgt durch Vermischen der Einzelkomponenten unter Feuchtigkeitsausschluss. Dieses ist dem Fachmann bekannt und dieser kann das Vermischen beispielsweise in branchenüblichen Planetenmischern und Dissolvern vornehmen. Dabei kann vorzugsweise unter Vakuum oder unter Stickstoffatmosphäre gearbeitet werden.

Die Erfindung betrifft auch ein Verfahren zur Herstellung der oben beschriebenen Zusammensetzung, indem man die Komponenten a) und b) unter Ausschluss von Feuchtigkeit miteinander vermischt.

Der Auftrag der erfindungsgemäßen Kleb- und Dichtstoffe aus dem/den Vorratsbehälter(n) kann manuell oder mit Hilfe von Dosiervorrichtungen erfolgen. Dem Fachmann sind die einzelnen Varianten der Verarbeitung von Kleb- und Dichtmassen bekannt.

Die erfindungsgemäßen Klebstoffe Kleb- und Dichtstoffe sind bei Lagerung unter Feuchtigkeitsausschluss sehr gut lagerstabil und härten nach Auftrag auf die zu verklebenden Substrate unter Einfluss von Feuchtigkeit aus. In der Regel genügt die Luftfeuchtigkeit, um die Vernetzung der Kleb- und Dichtstoffe zu bewirken.

Die erfindungsgemäßen Kleb- und Dichtstoffe sind sehr gut und auf einfache Weise zu verarbeiten. Nach dem Auftrag auf die Substrate erfolgt eine Hautbildung. Bei 23 °C und 50 % relativer Luftfeuchte bildet sich typischerweise innerhalb von 1 bis 200 Minuten eine Haut aus. Die Dauer der Durchhärtung ist unter anderem abhängig von der Dicke der gewünschten Klebverbindung. Typischerweise erfolgt innerhalb von 24 Stunden eine Durchhärtung in einer Schicht von 1 bis 5 mm.

Die erzeugten Klebungen zeichnen sich durch hervorragende mechanische Eigenschaften sowie durch eine ausgezeichnete Haftung aus. Durchgehärtete Klebungen weisen typischerweise E-Moduli von 0,2 bis 10 N/mm² auf, sowie Zugfestigkeiten von 1 bis 10 N/mm², Reißdehnungen von 100 bis 1000 % und Shore A Härten von 20 bis 90.

Die Erfindung betrifft darüber hinaus die Verwendung der oben beschriebenen Zusammensetzungen als Klebstoffe und/oder als Dichtstoffe.

Bevorzugt werden Klebungen von Holz, Glas, Metallen, lackierten Oberflächen, Kunststoffen und/oder mineralischen Untergründen erzeugt, insbesondere Klebungen von Metall- und Kunststoffteilen, Klebungen von mehreren Kunststoffteilen, Verklebungen von Holz- und Kunststoffteilen, Klebungen von Glas- und Metall- und/oder Kunststoffteilen, Klebungen von mineralischen Untergründen und Metallen und/oder Kunststoffteilen, ganz besonders bevorzugt Klebungen, bei denen als Metall Aluminium eingesetzt wird und als Kunststoff Polyolefin, Polycarbonat und/oder Poly(meth)acrylat, vorzugsweise Polypropylen, Polyethylen (die gegebenenfalls vorbehandelt worden sind, beispielsweise durch Corona- oder Plasmabehandlung oder durch Beflammen der Oberfläche), Polyvinylchlorid, Polycarbonat und/oder Polymethylmethacrylat, Polystyrol oder ABS.

Eine weitere bevorzugte Verwendung betrifft die Herstellung von Klebungen im Innen- und Aussenbereich, insbesondere für Anwendungen im Fahrzeug-, Container, Apparate- und Schiffsbau, im Innenausbau von Immobilien, Fassadenverkleidung, Dachabdichtungen etc. sowie im Fenster- und Türenbau.

Ganz besonders bevorzugt werden Klebungen bei der Herstellung von Schutzverglasungen, von Sandwichverklebungen, von Leuchtenabdeckungen, Lampenfassungen, Schalterteilen, Bedienungsknöpfen und im Fensterbau hergestellt.

Die erfindungsgemäßen Zusammensetzungen eignen sich hervorragend für das spannungsausgleichende Kleben unterschiedlichster, teilweise schwierig miteinander zu verklebender Materialien, wie Holz, Glas, Metalle, Kunststoffe und mineralischer Untergründe im Innen- und Außenbereich.

Die erfindungsgemäßen Zusammensetzungen kommen vorzugsweise für Anwendungen im Fahrzeug-, Container-, Apparate- und Schiffsbau zum Einsatz aber auch im Innenausbau von Immobilien einschließlich von "Do-it-yourself (DIY)" Anwendungen sowie im Fenster- und Türenbau.

Anwendungsbeispiele für Klebungen mit Aluminium sind Verklebungen von Dachelementen, Metallverkleidungen wie z.B. Sandwichverklebungen von Aluminium, Isolierung und Kunststoffen beim Kühlcontainerbau und Isolierungen im Garagenbau sowie das Abdichten und Kleben von Lüftungskanälen untereinander.

Anwendungsbeispiele für Klebungen mit Polycarbonat sind Verklebungen von Oberlichtern, Einhausungen, wie z.B. Fahrradständer, Unterstände, spezielle Windschutzscheiben, Gewächshäuser, Displays und Computer Monitore.

Anwendungsbeispiele für Klebungen mit Polymethylmethacrylat ("PMMA") sind Klebungen von Schutzverglasungen an.Maschinen sowie "Panzerglas" in Banken und Geldtransportfahrzeugen. Sandwichverklebungen (PMMA in z.B. einem Aluminiumrahmen), von Schalttafeln, Leuchtenabdeckungen, Lampenfassungen, Schalterteilen, Bedienungsknöpfen und im Fensterbau, beispielsweise für Wohnwagenfenster.

### Beispiele:

In den folgenden Anwendungsbeispielen wurde silanmodifiziertes Polyurethan (ST61 sowie ST75 von Evonik Hanse GmbH) sowie ein silanmodifizierter Polyether (MS-Polymer S303H von Kaneka Corp.) eingesetzt. ST61 wurde für hochmodulige Anwendungen entwickelt und wies eine dynamische Viskosität von 35.000 mPas (bei 25 °C) auf. Dabei handelte es sich um aliphatisches Polyurethan, das klar und farblos war.

### Beispiel 1A: Synthese eines aminopropylfunktionellen Siloxan-Oligomers (Oligomer 1)

In einen 2-I-Rührreaktor aus Glas mit Vakuum-, Dosier- und Destillationseinrichtung wurden 716 g 3-Aminopropyltrimethoxysilan (Dynasylan^{®} AMMO und 108 g Methanol vorgelegt. Über die Dosiervorrichtung wurde eine Mischung von 72 g Wasser und 80 g Methanol innerhalb von 10 - 30 Minuten zugetropft, wobei sich die Reaktions-mischung leicht erwärmte. Anschließend wurde die Mischung auf ca. 70 °C erwärmt und 2 Stunden lang gerührt. Nach Abdestillation des Alkohols im Vakuum (Sumpftemperatur 50 - 70 °C, Druck 400 mbar auf 10 mbar fallend) wurden 532 g einer klaren, farblosen bis leicht gelblichen Flüssigkeit (Oligomer 1) erhalten.

Dieses Oligomer wurde verwendet, um eine Testrezeptur mit dem silanterminierten Polyurethan-Klebstoff ST 61 herzustellen. Die Inhaltsstoffe sind in der nächsten Tabelle dargestellt.

### Beispiel 1B: Herstellung der Klebstoffzusammensetzung

| Komponente | Edukte für STPU-Klebstoffformulierung | Einwaage [g] |
|---|---|---|
| a) | Polymer ST 61 | 365,5 |
| b) | Phthalat-Weichmacher | 145,3 |
| c) | Kreide, beschichtet mit Stearinsäure | 444,5 |
| d) | AEROSIL^{®} R 202 | 30,4 |
| e) | Dynasylan^{®} VTMO | 14,3 |
| f) | Aminofunktionelles Silan (Dynasylan^{®} AMMO als Vergleichsbeispiel für Beispiel 1 C) bzw. Siloxan (Oligomer 1 aus Beispiel 1 A für Beispiel 1 C) | 11,23 |
| g) | Dibutylzinn dineodecanoat | 0,61 |

In einem Planetenmischer wurden Basispolymer a) und Weichmacher b) für 5 Minuten miteinander vermischt. Danach wurde die Kreide c) innerhalb von 10 Minuten portionsweise in die Masse eingerührt, und diese für 40 Minuten homogenisiert (Wärmeentwicklung). Anschließend wurde Komponente d) innerhalb von 10 Minuten portionsweise unter Rühren eingebracht und für 20 weitere Minuten vermischt. Diese Vormischung wurde dann unter Vakuum (ca. 30 mbar) und reduzierter Rührleistung auf ca. 40 °C abgekühlt. Nach Zugabe der Komponente e) und weiterer Durchmischung (15 Minuten) wurde die Masse bei 30 mbar für 5 Minuten zum sogenannten Masterbatch entgast.

Für die einzelnen anwendungstechnischen Versuche wurden immer 100 g dieses sogenannten Masterbatches mit 1,12 g Komponente f) und 0,06 g Komponente g) für 30 Sekunden in einem Rotationsmischer (SpeedMixer^{™}) gemischt. Der fertig formulierte Klebstoff wurde in eine Kartusche übergeführt. Die anwendungstechnischen Tests erfolgten aus der Kartusche.

### Anwendungstechnische Prüfung (Prüfmethoden)

Der Klebstoff wurde in Anlehnung an die DIN EN ISO 527 und DIN EN 1465 geprüft (Reißfestigkeit, Dehnung bei Reißfestigkeit , Zugscherfestigkeit Lapshear)

### Beispiel 1C: Verwendung eines Homo-Oligomers aus 3-Aminopropyltrimethoxysilan zur Haftungsverbesserung auf Aluminiumoberflächen

Es wurde ein Siloxan-Oligomer aus 3-Aminopropyl-trimethoxysilan verwendet, das mit 1,0 mol Wasser/mol Silizium gemäß Beispiel 1 A hergestellt wurde (= Oligomer 1). Dieses führte in der STPU-Klebstoffformulierung gemäß Beispiel 1 B zu einer verbesserten Haftung auf dem Substrat Aluminium von ca. 30 % gegenüber dem Marktstandard Dynasylan^{®} AMMO. Andere wichtige mechanische Kennwerte des Klebstoffs wie Zugfestigkeit und Dehnung bei Reißfestigkeit wurden dabei nicht negativ beeinflusst.

Die 180°-Zugscherfestigkeit der Klebeverbindung Aluminium/ Aluminium bei Anwesenheit von Oligomer 1 im Klebstoff betrug 4,77 N/mm², während die Vergleichsfestigkeit bei Anwesenheit von AMMO im Klebstoff 3,71 N/mm² betrug.

### Beispiele 2A bis 6A:

In Analogie zur Vorgehensweise des Beispiels 1 A wurden weitere aminopropyl-funktionelle Siloxan-Oligomere hergestellt. Die dabei eingesetzten Materialien sowie die Vorgehensweise sind in der nachstehenden Tabelle aufgeführt.

| Beispiel | Oligomer Nr. | Vorlage | Zugabe | Zugabedauer (min) | Reaktionstemperatur, -dauer | Ab-destillation | Ausbeute (g) |
|---|---|---|---|---|---|---|---|
| 2A | 2 | 178,4 g Isobutyltrimethoxysilan, 13,3 g Wasser, 0,72 g HCl (conc.), 40 g Methanol, 537,2 g AMMO | 40 g Wasser, 40 g Methanol | 5 | 70 °C 4 h | Sumpf: 50-70°C | 579,1 |
| | | | | | | Druck: 400 mbar (auf 10 mbar fallend) | |
| 3A | 3 | 716 g AMMO 108 g Methanol | 86,4 g Wasser, 80 g Methanol | 10-30 | 70 °C 2 h | Sumpf: 50-70°C | 495,2 |
| | | | | | | Druck: 400 mbar (auf 10 mbar fallend) | |
| 4A | 4 | 178,4 g Isobutyltrimethoxysilan, 13,3 g Wasser, 0,72 g HCl (conc.), 40 g Methanol, 179,0 g AMMO | 13,3 g Wasser, 20 g Methanol | 5 | 70 °C 4 h | Sumpf: 50-70°C | 289,0 |
| | | | | | | Druck: 400 mbar (auf 10 mbar fallend) | |
| 5A | 5 | 889,6 g N-Aminoethyl-3-aminopropyltrimethoxysilan), 132 g Methanol | 86,4 g Wasser 80 g Methanol | 10-30 | 70 °C 2h | Sumpf: 50-70°C | 668,8 |
| | | | | | | Druck: 400 mbar (auf 10 mbar fallend) | |
| 6A | 6 | 178,4 g Iso-butyltrimethoxysilan, 13,32 g Wasser, 0,72 g HCl (conc.), 20 g Methanol, 222,4 g Aminoethyl-3-amino-propyltrimethoxysilan | 13,3 g Wasser, 20g Methanol | zügig | 70 °C 4h | Sumpf: 50-70°C | 332,7 |
| | | | | | | Druck: 400 mbar (auf 10 mbar fallend) | |

Diese Oligomeren wurden verwendet, um Testrezepturen mit dem silanterminierten Polyurethan-Klebstoff ST 61 in Analogie zu Beispiel 1 B herzustellen. Die Inhaltsstoffe sind in der nächsten Tabelle dargestellt.

**Beispiele 2B bis 6B: Herstellung der Klebstofifzusammensetzungen**

| Beispiel Nr. | 2B | 3B | 4B | 5B | 6B |
|---|---|---|---|---|---|
| Edukte | Einwaage [g] | Einwaage [g] | Einwaage [g] | Einwaage [g] | Einwaage [g] |
| Polymer ST61 | 365,5 | 365,5 | 365,5 | 365,5 | 365,5 |
| Phthalat-Weichmacher | 145,3 | 145,3 | 145,3 | 145,3 | 145,3 |
| Kreide, beschichtet mit Stearin-säure | 444,4 | 444,5 | 444,5 | 444,5 | 444,5 |
| AEROSIL^{®} R 202 | 30,4 | 30,4 | 30,4 | 30,4 | 30,4 |
| Dynasylan^{®} VTMO | 14,3 | 14,3 | 14,3 | 14,3 | 14,3 |
| Aminofunktionelles Silan | 11,23 (Oligomer 2A) | 11,23 (Oligomer 3A) | 11,23 (Oligomer 4A) | 11,23 (Oligomer 5A) | 11,23 (Oligomer 6A) |
| Dibutylzinndineodecanoat | 0,61 | 0,61 | 0,61 | 0,61 | 0,61 |

Die Herstellung des Masterbatches und des fertig formulierten Klebstoffes der Beispiele 2B bis 6B erfolgte wie in Beispiel 1 B beschrieben. Die anwendungstechnischen Tests erfolgten aus der Kartusche enthaltend die jeweiligen KlebstoffFormulierungen.

### Beispiele 2C bis 6C: Anwendungstechnische Versuche

In Analogie zu Beispiel 1C wurden anwendungstechnische Versuche durchgeführt. Die Ergebnisse sind in den folgenden Tabellen dargestellt.

| Beispiel Nr. | Klebstoff | Haftung auf Al oder PC oder PMMA^{*)} | Reißdehnung auf Al oder PC oder PMMA^{*)} | Zugfestigkeit auf Al oder PC oder PMMA^{*)} |
|---|---|---|---|---|
| 2C** | 2B | 20 % verbessert gegenüber AMMO (auf Al) | 20 % geringer gegenüber AMMO (auf AI) | Keine Veränderung gegenüber AMMO (auf Al) |
| 3C | 3B | 32 % verbessert gegenüber AMMO (auf PC) | Keine Veränderung gegenüber AMMO (auf PC) | Keine Veränderung gegenüber AMMO (auf PC) |
| 4C** | 4B | 7 % verbessert gegenüber AMMO (auf PC) | 25 % verbessert gegenüber AMMO (auf PC) | 8 % verbessert gegenüber AMMO (auf PC) |
| 5C | 5B | 165 % verbessert gegenüber AMMO (auf PMMA) | Keine Veränderung gegenüber AMMO (auf PMMA) | Keine Veränderung gegenüber AMMO (auf PMMA) |
| 6C** | 6B | 25 % verbessert gegenüber AMMO (auf PMMA) | 7 % verbessert gegenüber AMMO (auf PMMA) | Keine Veränderung gegenüber AMMO (auf PMMA) |

| Beispiel Nr. | Klebstoff / Klebverbindung^{*)} | 180°-Zugscherfestigkeit (erfindungsgemäß / bei Anwesenheit von AMMO) | Reißdehnung (erfindungsgemäß / bei Anwesenheit von AMMO) | Zugfestigkeit (erfindungsgemäß / bei Anwesenheit von AMMO) |
|---|---|---|---|---|
| 2C** | 2B / Al/Al | 4,37 N/mm² / 3,71 N/mm² | 200 % / 172 % | 3,34 N/mm² / 3,16 N/mm² |
| 3C | 3B / PC/PC | 3,59 N/mm² / 2,73 N/mm² | 157 % / 172 % | 3,56 N/mm² / 3,16 N/mm² |
| 4C** | 4B / PC/PC | 2,91 N/mm² / 2,73 N/mm² | 215 % / 172 % | 3,41 N/mm² / 3,16 N/mm² |
| 5C | 5B / PMMA/P MMA | 3,29 N/mm² / 1,25 N/mm² | nicht bestimmt | nicht bestimmt |
| 6C** | 6B / PMMA / PMMA | 1,54 N/mm² / 1,25 N/mm² | 183 % / 172 % | 3,23 N/mm² / 3,16 N/mm² |

| | | | | |
|---|---|---|---|---|
| **Vergleichsversuche *) Al=Aluminium; PC=Polycarbonat; PMMA=Polymethylmethacrylat | | | | |

### Beispiele 7A bis 17A**:

Ferner wurden in Analogie zur Vorgehensweise des Beispiels 1A, vgl. dazu auch die Beispiele 2A bis 6A, weitere aminopropyl-funktionelle Siloxan-Oligomere (Co-Oligomere) hergestellt; die dabei zugrunde gelegten molaren Verhältnisse der jeweils eingesetzten Alkoxysilane sind in der nachstehenden Tabelle aufgeführt.

| Beispiel Nr. | Oligomer Nr. | Komponente A | Komponente B | molares Einsatzstoffverhältnis A zu B |
|---|---|---|---|---|
| 7A | 7 | AMMO | OCTMO | 1 zu 1 |
| 8A | 8 | AMMO | OCTMO | 3 zu 1 |
| 9A | 9 | AMMO | IBTMO | 1 zu 1 |
| 10A | 10 | AMMO | IBTMO | 3 zu 1 |
| 11A | 11 | DAMO | OCTMO | 1 zu 1 |
| 12A | 12 | DAMO | OCTMO | 3 zu 1 |
| 13A | 13 | TRIAMO | OCTMO | 3 zu 1 |
| 14A | 14 | DAMO | IBTMO | 1 zu 1 |
| 15A | 15 | DAMO | IBTMO | 3 zu 1 |
| 16A | 16 | DAMO | OCTMO | 1 zu 6,5 |
| 17A | 17 | TRIAMO | OCTMO | 1 zu 6,5 |

| | | | | |
|---|---|---|---|---|
| **Vergleichsversuche | | | | |

### Beispiele 7C bis 10C**:

In weiteren anwendungstechnischen Versuchen wurde in Anlehnung an Beispiel 1C das Haftvermögen von STPU-Klebstoffformulierungen auf Klebverbindungen PC/PC getestet, wobei diese in Analogie zu Beispiel 1B hergestellt wurden und dabei an Stelle von Oligomer 1 jeweils ein Oligomer aus der Reihe 7 bis 10 sowie zum Vergleich mit AMMO (monomer) als Standard eingesetzt wurden. Die Ergebnisse sind in der nachfolgenden Tabelle zusammengestellt:

| Beispiel Nr. | Silan bzw. Oligomer Nr. | 180°-Zugscherfestigkeit [N/mm²] |
|---|---|---|
| Standard | AMMO | 2,73 |
| 7C | 7 | 3,36 |
| 8C | 8 | 3,18 |
| 9C | 4 | 3,07 |
| 10C | 5 | 3,48 |

| | | |
|---|---|---|
| **Vergleichsversuche | | |

### Beispiele 11C bis 15C**:

In weiteren anwendungstechnischen Versuchen wurde in Anlehnung an Beispiel 1C das Haftvermögen von STPU-Klebstoffformulierungen auf Klebverbindungen PMMA/PMMA getestet, wobei diese in Analogie zu Beispiel 1B hergestellt wurden und dabei an Stelle von Oligomer 1 jeweils ein Oligomer aus der Reihe 11 bis 15 sowie zum Vergleich mit AMMO (monomer) als Standard eingesetzt wurden. Die Ergebnisse sind in der nachfolgenden Tabelle zusammengestellt:

| Beispiel Nr. | Silan bzw. Oligomer Nr. | 180°-Zugscherfestigkeit [N/mm²] |
|---|---|---|
| Standard | AMMO | 1,25 |
| 11C | 11 | 1,45 |
| 12C | 12 | 2,00 |
| 13C | 13 | 1,52 |
| 14C | 14 | 1,54 |
| 15C | 15 | 1,56 |

| | | |
|---|---|---|
| **Vergleichsversuche | | |

### Beispiele 16C und 17C**:

In weiteren anwendungstechnischen Versuchen wurde in Anlehnung an Beispiel 1C das Haftvermögen von STPU-Dichtmassenformulierungen auf Klebverbindungen PC/PC getestet, wobei diese in Anlehnung an Beispiel 1B hergestellt wurden und dabei jeweils ein Oligomer aus der Reihe 16 bis 17 sowie zum Vergleich mit einem Oligomer ausgehend von AMMO und PTMO gemäß EP 0 997 469 A2 als Standard eingesetzt wurden; die Zusammensetzung der STPU-Dichtmassenformulierungen ist in der nachstehenden Tabelle aufgeführt; ferner sind in der danach folgenden Tabelle die Ergebnisse der diesbezüglichen anwendungstechnischen Tests zusammengestellt:

| Edukte für STPU-Dichtmassenformulierung | Einwaage [g] |
|---|---|
| Polymer ST 75 | 101,02 |
| Phthalat-Weichmacher | 40,6 |
| Kreide beschichtet mit Stearinsäure | 131,32 |
| Dynasylan^{®} VTMO | 4,2 |
| AMMO/PTMO-Oligomer als Vergleichsbeispiel bzw. Oligomer 16 bzw. 17 | 2,8 |
| Dibutylzinn dineodecanoat | 0,056 |

| Beispiel Nr. | Oligomer Nr. | 180°-Zugscherfestigkeit [N/mm²] |
|---|---|---|
| Standard | AMMO/PTMO-Oligomer | 1,6 |
| 16C | 16 | 2,2 |
| 17C | 17 | 2,2 |

| | | |
|---|---|---|
| **Vergleichsversuche | | |

### Beispiele 18C bis 22C**

In weiteren anwendungstechnischen Versuchen wurde in Anlehnung an Beispiel 1C das Haftvermögen von MS-Klebstoffformulierungen auf Klebverbindungen PC/PC getestet, wobei diese in Anlehnung an Beispiel 1B hergestellt wurden und dabei jeweils ein Oligomer aus der Reihe 8, 9, 11, 12, 15 sowie zum Vergleich mit AMMO (monomer) als Standard eingesetzt wurden; die Zusammensetzung der MS-Klebstoffformulierungen ist in der nachstehenden Tabelle aufgeführt; ferner sind in der danach folgenden Tabelle die Ergebnisse der diesbezüglichen anwendungstechnischen Tests zusammengestellt:

| Edukte für MS-Klebstoffformulierung | Einwaage [g] |
|---|---|
| MS-Polymer S303H | 65,1 |
| Phthalat-Weichmacher | 47,3 |
| Kreide beschichtet mit Stearinsäure | 124,98 |
| AEROSIL^{®} R 202 | 15,6 |
| Dynasylan^{®} VTMO | 2,6 |
| Dynasylan^{®} AMMO als Vergleichsbeispiel bzw. Oligomer | 3,9 |
| Dibutylzinn dineodecanoat | 0,52 |

| Beispiel Nr. | Silan bzw. Oligomer Nr. | 180°-Zugscherfestigkeit [N/mm²] |
|---|---|---|
| Standard | AMMO | 1,35 |
| 18C | 11 | 1,65 |
| 19C | 8 | 1,71 |
| 20C | 12 | 1,62 |
| 21C | 15 | 1,59 |
| 22C | 9 | 1,83 |

| | | |
|---|---|---|
| **Vergleichsversuche | | |

Die vorliegenden anwendungstechnischen Beispiele belegen insbesondere die überraschende, vorteilhafte Anwendung erfindungsgemäßer funktioneller Alkoxysiloxanoligomergemische, wie sie aus den Beispielen zu entnehmen sind.

## Patentansprüche

1. Zusammensetzung enthaltend
a) ein mit mindestens einer Silangruppe (R¹)ₐ(X)_{b}Si- modifiziertes Polymer, worin X ausgewählt wird aus der Gruppe der Reste R²O-, R²NH-, R²-COO- und (R²)₂C=N-O-, R¹ und R² unabhängig voneinander Alkyl, Cycloalkyl und/oder Aryl bedeuten, a 0, 1 oder 2 ist, b 1, 2 oder 3 bedeutet und die Summe von a und b 3 ist, und
b) ein Gemisch mindestens enthaltend kettenförmige Aminopropyl-funktionelle Alkoxysiloxane der allgemeinen Formel I und/oder cyclische Aminopropyl-funktionelle Alkoxysiloxane der allgemeinen Formel II 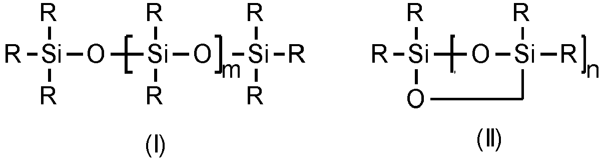 in denen die Gruppen R unabhängig voneinander aus
(i) Aminopropyl-funktionellen Gruppen der Formeln -(CH₂)₃-NH₂, -(CH₂)₃-NH(CH₂)₂-NH₂ oder -(CH₂)₃-NH(CH₂)₂-NH(CH₂)₂-NH₂, und
(ii) Methoxy- oder Ethoxy-Gruppen
bestehen,
m eine ganze Zahl von 2 bis 30 und n eine ganze Zahl von 3 bis 30 sind, wobei an ein Siliciumatom einer Verbindung der Formel I sowie II höchstens eine Aminopropyl-funktionelle Gruppe gebunden ist und
wobei der Quotient aus dem molaren Verhältnis von Si zu Alkoxy-Gruppen mindestens 0,3 ist und
dass die einzelnen Gruppen R in den Verbindungen der Formeln I sowie II eines Gemischs der Aminopropyl-funktionellen Alkoxysiloxan-Oligomere die Reste
- 3-Aminopropyl und Methoxy,
- 3-Aminopropyl und Ethoxy,
- N-(2-Aminoethyl)-3-aminopropyl und Methoxy,
- N-(2-Aminoethyl)-3-aminopropyl und Ethoxy,
- N-[N'-(2-Aminoethyl)-2-aminoethyl]-3-aminopropyl und Methoxy, oder
- N-[N'-(2-Aminoethyl)-2-aminoethyl]-3-aminopropyl und Ethoxy, darstellen.

2. Zusammensetzung nach Anspruch 1, **dadurch gekennzeichnet, dass** X mit R²O bedeutet, insbesondere, dass die Silangruppen des modifizierten Polymeren a) Alkyldialkoxysilangruppen und/oder Trialkoxysilangruppen sind, insbesondere Methyldimethoxysilangruppen und/oder Trimethoxysilangruppen und/oder Methyldiethoxysilangruppen und/oder Triethoxysilangruppen.

3. Zusammensetzung nach Anspruch 2, **dadurch gekennzeichnet, dass** das modifizierte Polymere a) terminale und/oder nicht-terminale Alkyldialkoxysilangruppen und/oder Trialkoxysilangruppen aufweist.

4. Zusammensetzung nach Anspruch 1, **dadurch gekennzeichnet, dass** das modifizierte Polymere a) ausgewählt wird aus der Gruppe der mit Silangruppen (R¹)ₐ(R²O)_{b}Si- modifizierten Polyurethane, Polysiloxane, Polyether, Polyacrylate oder Polybutadiene.

5. Zusammensetzung nach Anspruch 1, **dadurch gekennzeichnet, dass** in den Verbindungen der Formel I und/oder II Index o = 3 ist und Indizes p und q jeweils 2 bedeuten.

6. Zusammensetzung nach Anspruch 1, **dadurch gekennzeichnet, dass** die aminoalkylfunktionellen Siloxan-Oligomere ein Gemisch kettenförmiger und/oder cyclischer Siloxane der allgemeinen Formeln I und/oder II darstellen, wobei der Gehalt an Alkoxygruppen zwischen 0,1 und 70 Gew.-%, besonders bevorzugt zwischen 0,1 und 60 Gew.-% 5 und ganz besonders bevorzugt zwischen 5 und 50 Gew.-%, bezogen auf das Gewicht des Siloxan-Oligomerengemisches, beträgt.

7. Zusammensetzung nach Anspruch 1, **dadurch gekennzeichnet, dass** das Gemisch kettenförmiger und/oder cyclischer Siloxan-Oligomerer der Formeln I und/oder II einen Siedepunkt bei 1 atm Druck von größer als 200 °C aufweist.

8. Zusammensetzung nach Anspruch 1, **dadurch gekennzeichnet, dass** das Gemisch kettenförmiger und/oder cyclischer Siloxan-Oligomerer der Formeln I und/oder II einen Flammpunkt von größer als 100 °C aufweist.

9. Verfahren zur Herstellung einer Zusammensetzung nach Anspruch 1, **dadurch gekennzeichnet, dass** man die Komponenten a) und b) unter Ausschluss von Feuchtigkeit miteinander vermischt, wobei man
als Komponente b) ein Gemisch mindestens enthaltend kettenförmige Siloxane und/oder cyclischer Siloxane der allgemeinen Formeln I und/oder II einsetzt,
wobei man zur Herstellung einer solchen Komponente b)
- als Komponente A mindestens ein 3-Aminopropyl-funktionelles Trialkoxysilan, mindestens ein N-(2-Aminoethyl)-3-aminopropyl-funktionelles Trialkoxysilan und/oder mindestens ein N-[N'-(2-Aminoethyl)-2-aminoethyl]-3-aminopropyltrialkoxysilan einsetzt, wobei Alkoxy jeweils Methoxy oder Ethoxy bedeutet,
- die Komponente A unter Einsatz von 0,7 bis 1,2 mol Wasser pro 1 mol Si und der 0,1- bis 0,5fachen Gewichtsmenge an Methanol und/oder Ethanol, bezogen auf die eingesetzten Alkoxysilane, bei einer Temperatur von 60 bis 80 °C gezielt hydrolysiert sowie kondensiert bzw. cokondensiert, optional in Gegenwart eines Hydrolyse- bzw. Kondensationskatalysators, und
- nachfolgend den eingesetzten sowie bei der Umsetzung freigewordenen Alkohol bei Normaldruck oder unter vermindertem Druck und einer Sumpftemperatur bis 90 °C destillativ aus dem Produktgemisch entfernt, und
wobei man als Komponenten A
- 3-Aminopropyltrimethoxysilan (AMMO),
- 3-Aminopropyltriethoxysilan (AMEO),
- N-(2-Aminoethyl)-3-aminopropyltrimethoxysilan (DAMO),
- N-(2-Aminoethyl)-3-aminopropyltriethoxysilan (DAEO),
- N-[N'-(2-Aminoethyl)-2-aminoethyl]-3-aminopropyltrimethoxysilan (TRIAMO), oder
- N-[N'-(2-Aminoethyl)-2-aminoethyl]-3-aminopropyltriethoxysilan,
einsetzt.

10. Verwendung von Zusammensetzungen nach Anspruch 1 oder hergestellt nach Anspruch 9 als Klebstoffe und /oder als Dichtstoffe.

11. Verwendung nach Anspruch 10, **dadurch gekennzeichnet, dass** Verklebungen von Holz, Glas, Metallen, Kunststoffen, lackierten Oberflächen und/oder mineralischen Untergründen erzeugt werden, insbesondere Verklebungen von Metall- und Kunststoffteilen, Verklebungen von mehreren Kunststoffteilen, Verklebungen von Holz- und Kunststoffteilen, Verklebungen von Glas- und Metall- und/oder Kunststoffteilen, Verklebungen von mineralischen Untergründen und Metallen und/oder Kunststoffteilen, ganz besonders bevorzugt Verklebungen, bei denen als Metall Aluminium eingesetzt wird und als Kunststoff Polyolefin, Polycarbonat und/oder Poly(meth)acrylat, Polyvinylchlorid, Polycarbonat und/oder Polymethylmethacrylat.

12. Verwendung nach Anspruch 10, **dadurch gekennzeichnet, dass** die Verklebungen im Innen- und Aussenbereich insbesondere für Anwendungen im Fahrzeug-, Container-, Apparate- und Schiffsbau, im Innenausbau von Immobilien sowie im Fenster- und Türenbau erfolgen

13. Verwendung nach Anspruch 10, **dadurch gekennzeichnet, dass** die Verklebungen bei der Herstellung von Schutzverglasungen, von Sandwichverklebungen, von Leuchtenabdeckungen, Lampenfassungen, Schalterteilen, Bedienungsknöpfen und im Fensterbau erfolgen.

## Claims

1. Composition comprising
a) a polymer modified with at least one silane group (R¹)ₐ(X)_{b}Si- in which X is selected from the group of the R²O-, R²NH-, R²-COO- and (R²)₂C=N-O-radicals, R¹ and R² are each independently alkyl, cycloalkyl and/or aryl, a is 0, 1 or 2, b is 1, 2 or 3 and the sum total of a and b is 3, and
b) a mixture comprising at least catenated aminopropyl-functional alkoxysiloxanes of the general formula I and/or cyclic aminopropyl-functional alkoxysiloxanes of the general formula II 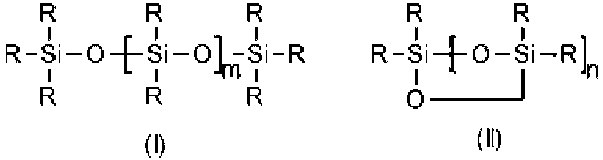
in which the groups R each independently consist of
(i) aminopropyl-functional groups of the formulae -(CH₂)₃-NH₂, -(CH₂)₃-NH(CH₂)₂-NH₂ oder -(CH₂)₃-NH(CH₂)₂-NH(CH₂)₂-NH₂, and
(ii) methoxy or ethoxy groups,
m is an integer from 2 to 30 and n is an integer from 3 to 30,
where not more than one aminoalkyl-functional group is bonded to a silicon atom in a compound of the formula I and II, and
where the quotient of the molar ratio of Si to alkoxy radicals is at least 0.3, and
that the individual groups R in the compounds of the formulae I and II of a mixture of the aminopropyl-functional alkoxy siloxane oligomers represent the radicals
- 3-aminopropyl and methoxy,
- 3-aminopropyl and ethoxy,
- N-(2-aminoethyl)-3-aminopropyl and methoxy,
- N-(2-aminoethyl)-3-aminopropyl and ethoxy,
- N-[N'-(2-aminoethyl)-2-aminoethyl]-3-aminopropyl and methoxy, or
- N-[N'-(2-aminoethyl)-2-aminoethyl]-3-aminopropyl and ethoxy.

2. Composition according to Claim 1, **characterized in that** X with R²O means especially that the silane groups of the modified polymer a) are alkyldialkoxysilane groups and/or trialkoxysilane groups, especially methyldimethoxysilane groups and/or trimethoxysilane groups and/or methyldiethoxysilane groups and/or triethoxysilane groups.

3. Composition according to Claim 2, **characterized in that** the modified polymer a) has terminal and/or non-terminal alkyldialkoxysilane groups and/or trialkoxysilane groups.

4. Composition according to Claim 1, **characterized in that** the modified polymer a) is selected from the group of the polyurethanes, polysiloxanes, polyethers, polyacrylates or polybutadienes which have been modified with silane groups (R¹)ₐ(R²O)_{b}Si-.

5. Composition according to Claim 1, **characterized in that**, in the compounds of the formula I and/or II, index o = 3 and indices p and q are each 2.

6. Composition according to Claim 1, **characterized in that** the aminoalkyl-functional siloxane oligomers are a mixture of catenated and/or cyclic siloxanes of the general formulae I and/or II, where the content of alkoxy groups is between 0.1% and 70% by weight, more preferably between 0.1% and 60% by weight 5 and most preferably between 5% and 50% by weight, based on the weight of the siloxane oligomer mixture.

7. Composition according to Claim 1, **characterized in that** the mixture of catenated and/or cyclic siloxane oligomers of the formulae I and/or II has a boiling point at pressure 1 atm of greater than 200°C.

8. Composition according to Claim 1, **characterized in that** the mixture of catenated and/or cyclic siloxane oligomers of the formulae I and/or II has a flashpoint of greater than 100°C.

9. Process for producing a composition according to Claim 1, **characterized in that** components a) and b) are mixed with one another with exclusion of moisture, wherein
component b) used is a mixture at least comprising catenated siloxanes and/or cyclic siloxanes of the general formulae I and/or II, such a component b) being produced by
- using, as component A, at least one 3-aminopropyl-functional trialkoxysilane, at least one N-(2-aminoethyl)-3-aminopropyl-functional trialkoxysilane and/or at least one N-[N'-(2-aminoethyl)-2-aminoethyl]-3-aminopropyltrialkoxysilane, where alkoxy in each case is methoxy or ethoxy,
- subjecting component A to controlled hydrolysis and condensation or co-condensation at a temperature of 60 to 80°C, optionally in the presence of a hydrolysis or condensation catalyst, using 0.7 to 1.2 mol of water per 1 mol of Si and 0.1 to 0.5 times the weight of methanol and/or ethanol, based on the alkoxysilanes used, and
- subsequently removing the alcohol used and the alcohol released in the reaction from the product mixture by distillation at standard pressure or under reduced pressure and a bottom temperature up to 90°C, and
using as component A
- 3-aminopropyltrimethoxysilane (AMMO),
- 3-aminopropyltriethoxysilane (AMEO),
- N-(2-aminoethyl)-3-aminopropyltrimethoxysilane (DAMO),
- N-(2-aminoethyl)-3-aminopropyltriethoxysilane (DAEO),
- N-[N'-(2-aminoethyl)-2-aminoethyl]-3-aminopropyltrimethoxysilane (TRIAMO), or
- N-[N'-(2-aminoethyl)-2-aminoethyl]-3-aminopropyltriethoxysilane.

10. Use of compositions according to Claim 1 or produced according to Claim 9 as adhesives and/or as sealants.

11. Use according to Claim 10, **characterized in that** bonds of wood, glass, metals, plastics, painted surfaces and/or mineral substrates are produced, especially bonds of metal parts and plastic parts, bonds of two or more plastic parts, bonds of wooden parts and plastic parts, bonds of glass parts and metal parts and/or plastic parts, bonds of mineral substrates and metal parts and/or plastic parts, most preferably bonds in which the metal used is aluminium and the plastic used is polyolefin, polycarbonate and/or poly(meth)acrylate, polyvinyl chloride, polycarbonate and/or polymethylmethacrylate.

12. Use according to Claim 10, **characterized in that** the bonds are made indoors and outdoors, especially for applications in motor vehicle construction, container construction, appliance manufacture and shipbuilding, in the interior fitout of real estate, and in window and door construction.

13. Use according to Claim 10, **characterized in that** the bonds are made in the production of protective glazing, sandwich bonds, lighting covers, lamp holders, switch parts and control knobs, and in window construction.

## Revendications

1. Composition, contenant
a) un polymère modifié par au moins un groupe silane (R¹)ₐ(X)_{b}Si-, où X est choisi dans le groupe des radicaux R²O-, R²NH-, R²-COO- et (R²)₂C=N-O-, R¹ et R² représentent chacun indépendamment de l'autre un groupe alkyle, cycloalkyle et/ou aryle, a vaut 0, 1 ou 2, b vaut 1, 2 ou 3, et la somme de a et de b est égale à 3, et
b) un mélange contenant au moins des alcoxysiloxanes à fonctionnalité aminopropyle en chaîne de formule générale I et/ou des alcoxysiloxanes à fonctionnalité aminopropyle cycliques de formule générale Il 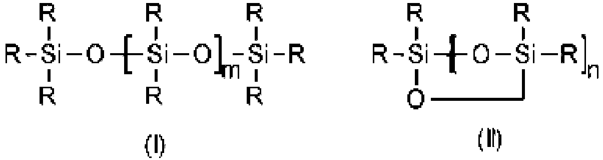
dans lesquelles les groupes R sont constitués chacun indépendamment les uns des autres
(i) des groupes à fonctionnalité aminopropyle de formules -(CH₂)₃-NH₂, -(CH₂)ₛ-NH(CH₂)₂-NH₂ ou -(CH₂)₃-NH(CH₂)₂-NH(CH₂)₂-NH₂, et
(ii) des groupes méthoxy ou éthoxy,
m est un nombre entier de 2 à 30 et n est un nombre entier de 3 à 30,
au plus un groupe à fonctionnalité aminopropyle étant lié à un atome de silicium d'un composé de formule I et II, et
le rapport en mole de Si aux groupes alcoxy étant d'au moins 0,3, et
que les groupes individuels R dans les composés de formules I et II d'un mélange d'oligomères d'alcoxysiloxanes à fonctionnalité aminopropyle représentent les radicaux
- 3-aminopropyle et méthoxy,
- 3-aminopropyle et éthoxy,
- N-(2-aminoéthyl)-3-aminopropyle et méthoxy,
- N-(2-aminoéthyl)-3-aminopropyle et éthoxy,
- N-[N'-(2-aminoéthyl)-2-aminoéthyl]-3-aminopropyle et méthoxy, ou
- N-[N'-(2-aminoéthyl)-2-aminoéthyl]-3-aminopropyle et éthoxy.

2. Composition selon la revendication 1, **caractérisée en ce que** X désigne R²O, en particulier **en ce que** les groupes silane du polymère modifié a) sont des groupes alkyldialcoxysilane et/ou des groupes trialcoxysilane, en particulier des groupes méthyldiméthoxysilane et/ou des groupes triméthoxysilane et/ou des groupes méthyldiéthoxysilane et/ou des groupes triéthoxysilane.

3. Composition selon la revendication 2, **caractérisée en ce que** le polymère modifié a) comprend des groupes alkyldialcoxysilane et/ou des groupes trialcoxysilane terminaux et/ou non terminaux.

4. Composition selon la revendication 1, **caractérisée en ce que** le polymère modifié a) est choisi dans le groupe des polyuréthanes, polysiloxanes, polyéthers, polyacrylates ou polybutadiènes modifiés par des groupes silane (R¹)ₐ(R²O)_{b}Si-.

5. Composition selon la revendication 1, **caractérisée en ce que**, dans les composés de formules I et/ou II, l'indice o = 3, et chacun des indices p et q vaut 2.

6. Composition selon la revendication 1, **caractérisée en ce que** les oligomères de siloxane à fonctionnalité aminoalkyle représentent un mélange de siloxanes de formules générales I et/ou II en chaine et/ou cycliques, la teneur en les groupes alcoxy étant comprise entre 0,1 et 70 % en poids, d'une manière particulièrement préférée entre 0,1 et 60 % en poids 5, et d'une manière tout particulièrement préférée entre 5 et 50 % en poids, par rapport au poids du mélange d'oligomères de siloxane.

7. Composition selon la revendication 1, **caractérisée en ce que** le mélange d'oligomères de siloxane de formules I et/ou II, en chaîne et/ou cycliques, présente un point d'ébullition sous une pression de 1 atm supérieure à 200°C.

8. Composition selon la revendication 1, **caractérisée en ce que** le mélange d'oligomères de siloxane de formules I et/ou II, en chaîne et/ou cycliques, présente un point d'éclair supérieur à 100°C.

9. Procédé de fabrication d'une composition selon la revendication 1, **caractérisé en ce qu'**on mélange les uns aux autres les composants a) et b) à l'abri de l'humidité, en utilisant
en tant que composant b) un mélange contenant au moins des siloxanes en chaîne et/ou des siloxanes cycliques de formules générales I et/ou II, dans lequel, pour la préparation d'un tel composant b),
- on utilise en tant que Composant A au moins un trialcoxysilane à fonctionnalité 3-aminopropyle, au moins un trialcoxysilane à fonctionnalité N-(2-aminoéthyl)-3-aminopropyle, et/ou au moins un N-[N'-(2-aminoéthyl)-2-aminoéthyl]-3-aminopropyltrialcoxysilane, alcoxy désignant dans chaque cas un groupe méthoxy ou éthoxy,
- on hydrolyse d'une manière ciblée, et on condense ou co-condense, en option en présence d'un catalyseur d'hydrolyse ou de condensation, le Composant A par addition de 0,7 à 1,2 mole d'eau par mole de Si et d'une quantité 0,1 à 0,5 fois plus grande de méthanol et/ou d'éthanol par comparaison avec les alcoxysilanes utilisés, à une température de 60 à 80°C, et
- puis on élimine par distillation du mélange de produits l'alcool utilisé, libéré lors de la réaction, sous la pression normale ou sous une pression réduite et à une température de fond allant jusqu'à 90°C, et
où l'on utilise en tant que Composant A
- le 3-aminopropyltriméthoxysilane (AMMO),
- le 3-aminopropyltriéthoxysilane (AMEO),
- le N-(2-aminoéthyl)-3-aminopropyltriméthoxysilane (DAMO),
- le N-(2-aminoéthyl)-3-aminopropyltriéthoxysilane (DAEO),
- le N-[N'-(2-aminoéthyl)-2-aminoéthyl]-3-aminopropyltriméthoxysilane (TRIAMO), ou
- le N-[N'-(2-aminoéthyl)-2-aminoéthyl]-3-aminopropyltriéthoxysilane.

10. Utilisation de compositions selon la revendication 1 ou fabriquées selon la revendication 9 en tant qu'adhésifs et/ou matériaux d'étanchéité.

11. Utilisation selon la revendication 10, **caractérisée en ce qu'**on produit des collages de bois, de verre, de métaux, de plastiques, de surfaces vernies et/ou de substrats minéraux, en particulier des collages de pièces métalliques et plastiques, des collages de plusieurs pièces plastiques, des collages de pièces en bois et en plastique, des collages de pièces en verre et en métal et/ou en plastique, des collages de substrats minéraux et de métaux et/ou de pièces plastiques, d'une manière tout particulièrement préférée des collages pour lesquels on utilise de l'aluminium en tant que métal et, en tant que plastique, une polyoléfine, un polycarbonate et/ou un poly((méth)acrylate), un poly(chlorure de vinyle), un polycarbonate et/ou un poly(méthacrylate de méthyle).

12. Utilisation selon la revendication 10, **caractérisée en ce que** les collages sont réalisés dans le domaine intérieur et extérieur, en particulier pour des applications dans la construction automobile, la construction de conteneurs, la construction d'appareils et la construction navale, en aménagement intérieur d'immeubles, ainsi que dans la construction des fenêtres et des portes.

13. Utilisation selon la revendication 10, **caractérisée en ce que** les collages sont réalisés lors de la fabrication de vitrages de protection, de collages en sandwich, de couvercles de luminaires, de culots de lampes, de pièces d'interrupteurs, de boutons de manœuvre et dans la construction de fenêtres.
